**Europäisches Patentamt**

**European Patent Office**

**Office européen des brevets**

(19)

(11) Veröffentlichungsnummer: **0 003 576**
**B1**

(12)

# EUROPÄISCHE PATENTSCHRIFT

(45) Veröffentlichungstag der Patentschrift:
08.12.82

(51) Int. Cl.³: **H 04 N 9/62**

(21) Anmeldenummer: **79100317.1**

(22) Anmeldetag: **02.02.79**

(54) **Farbfernseh-Empfänger mit automatischem Abgleichsystem.**

(30) Priorität: **10.02.78 DE 2805691**

(43) Veröffentlichungstag der Anmeldung:
**22.08.79 Patentblatt 79/17**

(45) Bekanntmachung des Hinweises auf die Patenterteilung:
**08.12.82 Patentblatt 82/49**

(84) Benannte Vertragsstaaten:
**BE FR GB IT NL SE**

(56) Entgegenhaltungen:
**DE-A-2 515 366**
**US-A-3 792 195**
**US-A-3 962 722**

(73) Patentinhaber: **SIEMENS AKTIENGESELLSCHAFT**
**Berlin und München, Postfach 22 02 61,**
**D-8000 München 22 (DE)**

(72) Erfinder: **Dangschat, Rainer, Jahnstrasse 8,**
**D-8011 Landsham (DE)**
Erfinder: **Leichtl, Helmut, Mühlenweg 47,**
**D-8102 Mittenwald (DE)**
Erfinder: **Jeschke, Alfred, Milbertshofener Strasse 15,**
**D-8000 München 40 (DE)**
Erfinder: **Winkler, Wolfgang, Am Feldl 16,**
**D-8011 Egmating (DE)**

## Farbfernseh-Empfänger mit automatischem Abgleichsystem

Die Erfindung betrifft einen Farbfernseh-Empfänger gemäß dem Oberbegriff des Patentanspruchs 1.

Bei den bekannten Farbfernseh-Empfängern werden die Impulsstufen für die Rasterkorrektur, die Horizontal- und Vertikalablenkung in analoger Weise angesteuert. Diese Ansteuerstufen sind teils integriert und teils mit diskreten Bausteinen bestückt.

Zur Ansteuerung der Horizontalablenk-Endstufe erzeugt ein Oszillator zeilenfrequente Schwingungen. Diese werden mit dem senderseitigen Zeilensynchronimpuls und dem empfängerseitigen Zeilenrückschlagimpuls in Phasenvergleichsschaltungen (z. B. phase locked loop) verglichen. Die bei Phasenunterschieden erzeugten Regelspannungen dienen zum Synchronisieren des Oszillators (VCO). Als Abgleichpositionen sind im allgemeinen Phasenlage und Grundfrequenz des Oszillators vorgesehen.

Zur Ansteuerung der Vertikalablenk-Endstufe wird ein Sägezahngenerator (z. B. Sperrschwingerschaltung) direkt durch den Vertikalsynchronimpuls synchronisiert und steuert über eine Treiberschaltung die Vertikalablenk-Endstufe an. Die durch die Erwärmung der Ablenkspule verursachte Stromverkleinerung wird über eine Gegenkopplung kompensiert. Einstellgrößen sind hier üblicherweise Frequenz, Bildhöhe und Linearität.

Auf dem Bildschirm fällt der Ablenkmittelpunkt der Elektronenstrahlen nicht mit dem Krümmungsmittelpunkt des Bildschirmes zusammen. Deshalb ist ein auf dem Bildschirm abgebildetes Quadrat mit seinen vertikalen Linien konkav kissenförmig verzerrt. Die Verzerrung der horizontalen Linien ist bei modernen Inline-Farbbildröhren in der Regel bereits durch das Ablenkfeld kompensiert. Zur Korrektur der sogenannten Ost/West-Kissenverzerrrung wird z. B. die bekannte Diodenmodulatorschaltung angewendet, welche die Spannung über der Horizontal-Ablenkspule so moduliert, daß der Zeilenablenkstrom in Bildmitte größer als am Bildanfang und -ende ist und über die Bildfrequenz betrachtet einen tonnenförmigen Verlauf hat. Einstellgrößen der sogenannten Diodenmodulatorschaltung sind der Modulationsgrad über Bildfrequenz, Symmetrie (sogenannte Trapezkorrektur) und Bildbreite.

An den analogen Signalstufen für die Videoschaltung und den PAL-Dekor werden z. B. die Größen für den Weißwert, die Graubalance und die Strahlstrombegrenzung abgeglichen.

In die Positionen für die abzugleichenden Größen, welche vorstehend bei den einzelnen Impuls- bzw. Signalstufen angeführt sind, werden Potentiometer eingesetzt, die während oder nach der Gerätemontage nach visueller Beurteilung eines Testbildes oder nach Messung einer elektrischen Größe von Hand eingestellt werden. Diese Einstellungen sind deshalb zumeist subjektiv und außerdem kostenintensiv.

Aus der DE-A-2 515 366 ist ein Verfahren zum Betrieb eines Fernseh-Bildwiedergabegerätes bekannt, bei dem während des Betriebes des Fernsehgerätes laufend Ist- mit an Potentiometern manuell einstellbaren Soll-Werten verglichen werden, wozu dem Fernseh-Bildwiedergabegerät außer den Bildinhaltssignalen und den Synchronsignalen zusätzlich noch ein Prüfsignal zugeführt wird, welches zu vorgegebenen Zeiten wenigstens zwei Signalwerte mit unterschiedlichen vorgegebenen Helligkeitswerten enthält und wobei aus dem Kathodenstrom der Bildröhre Meßspannungen abgeleitet und mit vorgegebenen Sollspannungen verglichen werden.

Aufgabe der Erfindung ist es, einen Farbfernseh-Empfänger mit automatischem Abgleichsystem, bei dem die Soll-Werte für die Ost/West-Rasterkorrektur, die Vertikalablenkung und analoge Signalstufen — wie Weißwert, Graubalance, Strahlstrombegrenzung, Bildröhrenarbeitspunkt — automatisch eingebbar sind, anzugeben.

Diese Aufgabe wird erfindungsgemäß mit den kennzeichnenden Merkmalen des Patentanspruchs 1 gelöst.

Zweckmäßige Ausgestaltungen des Erfindungsgedankens sind in den Unteransprüchen enthalten.

Die Vorteile des erfindungsgemäßen Farbfernseh-Empfängers werden an Hand von Ausführungsbeispielen aufgezeigt. In der dazugehörenden Zeichnung zeigt

Fig. 1 ein Blockdiagramm des erfindungsgemäßen Farbfernseh-Empfängers,

Fig. 2 ein Prinzipschaltbild des digitalen Synchronbausteins,

Fig. 3 eine schematische Darstellung des Synchronisationsvorgangs,

Fig. 4 ein Prinzipschaltbild der Logikschaltung zum Ansteuern der Vertikalablenk-Endstufe,

Fig. 5 die Funktion der Vertikalstufe,

Fig. 6 ein Prinzipschaltbild der Logikstufe zur Ansteuerung der Rasterkorrektur-Endstufe,

Fig. 7 die Darstellung der Anfangswertbildung der Logikschaltung gemäß Fig. 6,

Fig. 8 die Funktion der Ost/West-Korrektur und

Fig. 9 ein Prinzipschaltbild für den automatischen Abgleich.

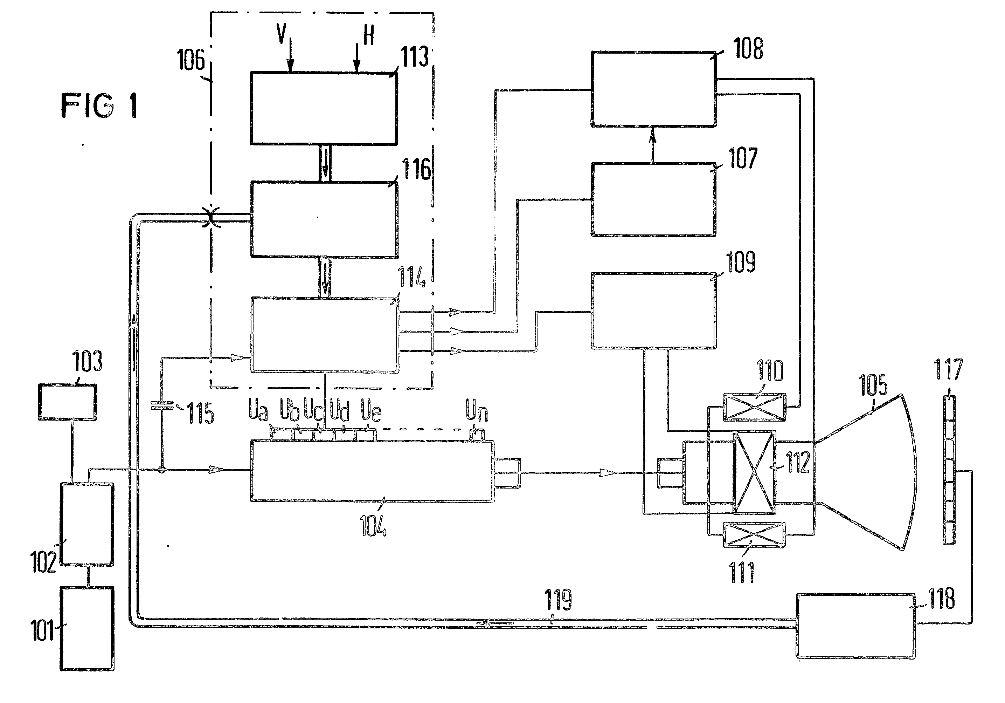

Fig. 1 zeigt das Blockdiagramm des erfindungsgemäßen Farbfernseh-Empfängers. Das vom Sender empfangene Signal gelangt über eine HF-Stufe (Tuner) 101, über eine ZF-Stufe und Video-Demudolator 102 an das Video-Signalteil und den PAL-Dekoder 104 und von dort an die Bildröhre 105. Da die Übertragung vom Sender zum Empfänger in Analogtechnik erfolgt, arbeiten die genannten Stufen in Analogtechnik, da eine zweimalige Umwandlung der analog gesendeten Nutzsignale (die Bildröhre muß analog angesteuert werden) einen Qualitätsverlust mit sich bringen würde und auch wirtschaftlich nicht sinnvoll erschiene.

Von der ZF-Stufe 102 wird die Ton-Endstufe 103 abgeleitet.

Der Farbfernseh-Empfänger enthält eine digitale Steuereinheit 106, welche die Rasterkorrektur-Endstufe 107 sowie die Horizontalablenk- 108 und die Vertikalablenk-Endstufe 109 ansteuert.

Die Horizontalablenk-Endstufe 108 steuert die Spulen 110 und 111 an, während die Vertikalablenk-Endstufe 109 die entsprechenden Spulen (in der Figur ist nur die obere Spule 112 sichtbar) zur Vertikalablenkung ansteuert.

Die digitale Steuereinheit 106 enthält einen Zeilenzähler 113, welcher mit Impulsen der Vertikal- V bzw. Horizontal-Frequenz H versorgt wird. Die Impulse werden von einem digitalen Synchronbaustein geliefert, welcher in der Logikschaltung 114 enthalten ist. Die Logikschaltung 114 erhält ein Videosignal über den Koppelkondensator 115 vom Video-Demodulator 102.

Die Logikschaltung 114 enthält neben dem Synchronbaustein Schaltungen zum Ansteuern der Rasterkorrektur-, der Horizontalablenk- und der Vertikalablenk-Endstufen 107, 108 und 109.

Weiterhin ist in der digitalen Steuereinheit 106 ein programmierbarer Festwertspeicher 116 z. B. als PROM, EPROM, EAROM oder als batteriegepuffertes RAM ausgeführt mit vorzugsweise 156 × 8 bit Speicherplätze enthaltend.

Der programmierbare Festwertspeicher 116 enthält die Information, welche zum Betrieb der digitalen Steuereinheit im Farbfernseh-Empfänger erforderlich sind.

Weiterhin liefert die digitale Steuereinheit 106 Einstellspannungen $U_a$, $U_b$, $U_c$, $U_d$, $U_e$ ... $U_n$, welche an Stelle von Potentiometern am Video-Signalteil und dem PAL-Dekoder 104 die dort abzugleichenden Größen wie z. B. Weißwert, Graubalance, Strahlstrombegrenzung automatisch abgleichen.

Weiterhin ist in der Fig. 1 ein Sensorsystem 117 vor der Bildröhre 105 zu erkennen. Dieses Sensorsystem 117 dient dem automatischen Abgleich mittels eines Abgleichrechners 118 und einer externen Datenübertragungsleitung 119. Im Abgleichrechner 118 werden die vorstehend angegebenen abzugleichenden Größen mit einem Sollwert verglichen und zwischengespeichert. Wenn Soll- und Istwert übereinstimmen, wird der Festwertspeicher 116 mit dem Inhalt des Rechner-Zwischenspeichers programmiert.

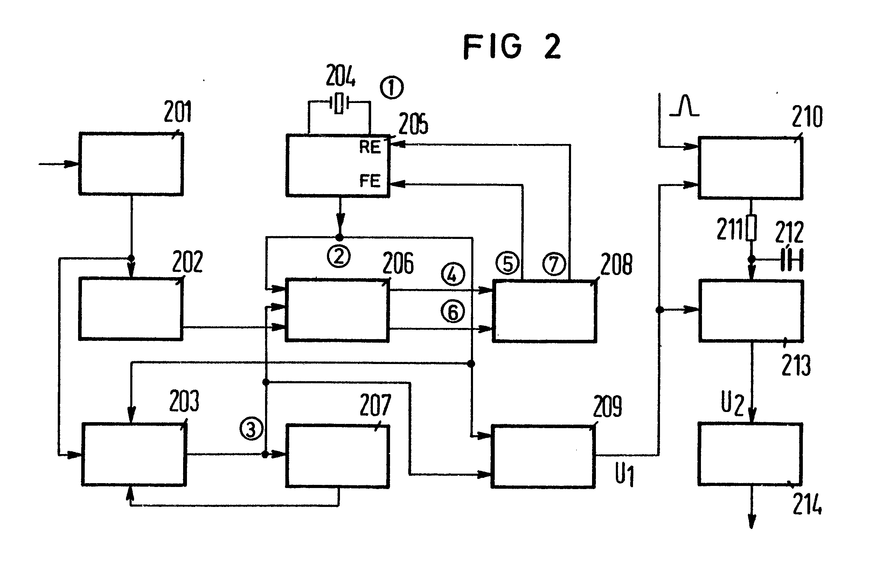

In Fig. 2 ist ein Prinzipschaltbild des digitalen Synchronbausteins zur Ansteuerung der Zeilenendstufe dargestellt. Er enthält ein Amplitudensieb 201, welches analog arbeitet und ein Videosignal vom Video-Demodulator (in der Figur nicht dargestellt) erhält. Ferner ist eine Senderkennung 202 und ein Tor 203 zur Störaustastung vorhanden. Das Tor 203, das als Gatterschaltung ausgeführt ist, schaltet ab, wenn kein Synchronimpuls empfangen wird. Weiterhin enthält der digitale Synchronbaustein einen Schwingquarz 204, der einen steuerbaren Frequenzteiler 205 ansteuert. Ferner sind ein Phasenvergleich 206, ein Koinzidenzdetektor 207, eine Schaltung zur Begrenzung der Regelsteilheit 208 und ein weiteres Tor 209 (als Gatterschaltung ausgebildet) vorhanden. Am Tor 209 wird ein Ausgangsimpuls $U_1$ erhalten, welcher einem Phasenvergleich 210 mit dem Zeilenrückschlagimpuls der Zeilenendstufe unterzogen wird. Über ein Integrationsglied aus einem Widerstand 211 und einem Kondensator 212 wird die Regelinformation einem analogen Phasenschieber 213 zugeleitet, welcher den Impuls $U_2$ entsprechend verzögert der analogen Ausgangsstufe 214 der Horizontalablenk-Endstufe zuführt.

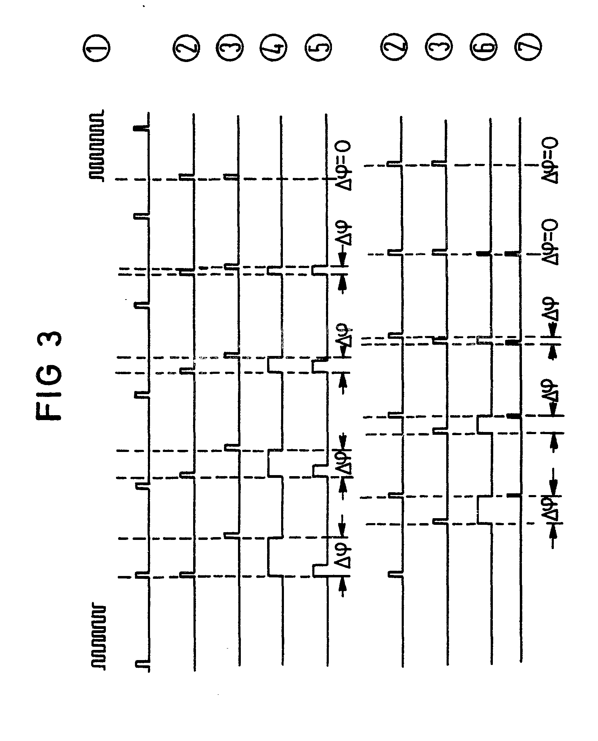

Die in der Figur angegebenen Ziffern 1 bis 7 beziehen sich auf die Fig. 3 und werden an Hand dieser Figur erläutert.

Der digitale Synchronbaustein gemäß Fig. 2 arbeitet nach dem Prinzip eines steuerbaren Frequenzteilers. Von einer quarzstabilen Taktfrequenz 204, welche kein ganzzahliges Vielfaches der Zeilenfrequenz betragen muß (beispielsweise doppelte Farbhilfsträgerfrequenz 8,86 MHz), wird im freilaufenden, nicht synchronisierten Zustand, d. h., wenn von der Schaltung kein Synchronimpuls empfangen wird, durch Teilung im Frequenzteiler 205 eine Frequenz abgeleitet, welche möglichst identisch mit der Zeilensollfrequenz von 15,625 kHz ist. Diese Frequenz stellt die horizontale Freilauffrequenz des Synchronbausteins und damit der angeschlossenen Zeilen-Endstufe dar. Aufgrund ihrer hohen Stabilität kann sie direkt als Referenzfrequenz zur Wiedergabe einer in einem Bildspeicher abgespeicherten Information (z. B. Teletext oder Viewdata) verwendet werden.

Im Falle eines empfangenen Synchronimpulses, welcher am Ausgang des Amplitudensiebes 201 zur Verfügung steht, wird durch eine Senderkennung 202 ein Phasenvergleich 206 aktiviert, welcher nach einer Entscheidung, ob der erste wahrgenommene Synchronimpuls in die erste oder zweite Zeilenhälfte fällt, Synchronität zwischen Synchronimpuls und Ausgangsimpuls des steuerbaren Frequenzteilers 205 bewirkt.

Falls sich der erste wahrgenommene Synchronimpuls in der ersten Zeilenhälfte befindet (vorauseilender Fall), wird durch kurzzeitiges Sperren über den Freigabe-Eingang FE des Teilers 205 dessen Endstand erst später als im freilaufenden Zustand erreicht. Der sich auf diese Weise verringernde zeitliche Abstand zwischen Teiler- und Synchronimpuls wirkt so lange auf die Freigabe des Teilers 205 ein, bis ein eingeschwungener Zustand erreicht ist.

Falls sich der erste wahrgenommene Synchronimpuls in der zweiten Zeilenhälfte befindet (nacheilender Fall), wird der Teiler 205 vor Erreichen des festgelegten Teilungsverhältnisses über den Rücksetz-Eingang RE zurückgesetzt. Diese Frequenzerhöhung verringert wiederum den zeitlichen Abstand zwischen Synchron- und Teilerimpuls, bis beide Vorderflanken identisch sind.

Prinzipiell könnte die Synchronität innerhalb einer Zeilenperiode erreicht werden. Da jedoch Abweichungen größer als 10% von der Sollfrequenz die halbleiterbestückte Zeilen-Endstufe zerstören können, wird die Frequenzänderung während des Regelvorgangs mit Hilfe von Torschaltungen 208 auf ein zulässiges Maß begrenzt.

Im vorauseilenden Fall verbleibt im eingeschwungenen Zustand eine zeitliche Abweichung zwischen der Vorderflanke des Teilerimpulses und der des Synchronimpulses, welche durch die endliche Regelverstärkung bedingt ist. Diese Abweichung wird eliminiert, indem bei Erreichen des eingeschwungenen Zustandes die Zeilen-Endstufe direkt mit dem Synchronimpuls getriggert wird. Der eingeschwungene Zustand ist dann erreicht, wenn die Vorderflanke des Synchronimpulses zeitlich innerhalb des vom Teilerimpuls gebildeten Tores 209 liegt. Somit wird der Teilerimpuls nur im freilaufenden Zustand und während des Synchronisiervorganges zur Triggerung der Zeilen-Endstufe verwendet. Im synchronisierten Zustand hat der Teilerimpuls die Funktion eines Hilfsoszillators, welcher bei plötzlichem Ausfall des Synchronimpulses (z. B. Umschalten auf eine andere Programmquelle) in kurzem zeitlichem Abstand folgend zur Verfügung steht. Die Störimpulsbefreiung dieser quasi-direkten Synchronisation ist aufgrund von digital gebildeten und damit zeitlich exakt definierten Toren 209 sowie 203 am Eingang des Phasenvergleichs 206, für den Synchronimpuls in hohem Maße sichergestellt. Ein Koinzidenzdetektor 207 sorgt bei Ausfall der Synchronisation für sofortige Unterdrückung des Tores 203, um rasches Wiedereinfangen zu gewährleisten.

Die Umschaltung von Teilerimpuls auf Synchronimpuls im eingeschwungenen Zustand ermöglicht die Anwendung einer Teilertaktfrequenz kleiner als 10 MHz, da damit der in der Digitaltechnik auftretende Quantisierungsfehler umgangen wird.

Der Ausgangsimpuls $U_1$ des bisher beschriebenen Systems (Teiler- oder Synchronimpuls) wird einem digitalen Phasendiskriminator 210 zugeleitet, welcher den durch die Verzögerung der Zeilen-Endstufe bedingten zeitlichen Abstand zwischen Zeilenrückschlagimpuls und Ausgangsimpuls $U_1$ ermittelt. Die über das Integrationsglied 211, 212 integrierte Regelinformation bewirkt in der analog arbeitenden Phasenschieberkette 213 die zeitliche Koinzidenz der beiden Impulse. Der Einsatz der analogen Phasenschieberkette 213 ist erforderlich, um den Quantisierungsfehler eines digitalen Phasenschiebergliedes zu vermeiden.

Der Ausgangsimpuls $U_2$ der Phasenschieberkette wird in einer Zählstufe 214 auf eine vom Schaltungstyp der Zeilen-Endstufe abhängige Impulsbreite normiert und über einen Ausgangsverstärker der Zeilen-Endstufe zugeführt.

Der digitale Synchronbaustein nach dem Prinzip eines steuerbaren Frequenzteilers hat im Vergleich zu den herkömmlichen PLL-Schaltungen mit VC-Oszillatoren eine Reihe von Vorteilen. Aufgrund der quarzstabilen Teilertaktfrequenz entfällt der Abgleichvorgang der Freilauffrequenz, welche bei VC-Oszillatoren von der Peripherie abhängt. Weiterhin ist durch die digital erzeugten und damit zeitlich exakt definierten Torschaltungen eine hohe Störimpulsbefreiung möglich. Weiterhin ermöglicht der Synchronbaustein eine schnelle Synchronisation ohne den bei PLL-Schaltungen gegebenen hohen Verlust an Störimpulsbefreiung. Die Frequenzänderung pro Zeile ist nur von dem für die Zeilen-Endstufe zulässigen Wert abhängig.

In der Fig. 3 ist schematisch der Synchronisationsvorgang dargestellt. In der Figur oben und mit 1 bezeichnet ist die Taktfrequenz von 8,86 MHz des Schwingquarzes 204 gemäß Fig. 2 dargestellt. Der steuerbare Frequenzteiler 205 gemäß Fig. 2 gibt alle 64 µs einen Teilerimpuls ab. In der Fig. 3 ist in der zweiten Kurve von oben der freilaufende Teilerimpuls (ohne Synchronimpuls) dargestellt. Die nächsten vier Kurven 2, 3, 4, 5 zeigen den Synchronisationsvorgang im vorauseilenden Fall, während die Kurven 2, 3, 6, 7 den Synchronisationsvorgang im nacheilenden Fall bezeichnen. $\Delta\varrho$ bezeichnet dabei die Phasendifferenz Teilerimpuls — Synchronimpuls im vorauseilenden Fall bzw. Synchronimpuls — Teilerimpuls im nacheilenden Fall.

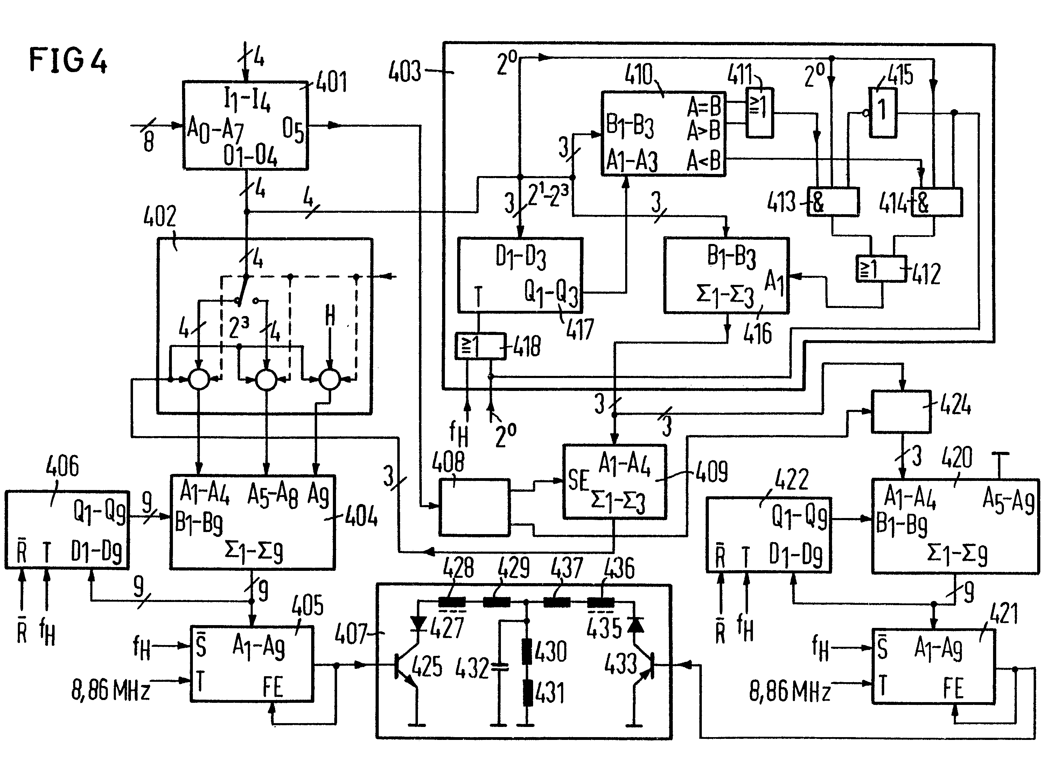

Fig. 4 zeigt ein Prinzipschaltbild der Logikschaltung zum Ansteuern der Vertikalablenk-Endstufe. Ein Speicher 401 mit der Organisation $156 \times 5$ bit, welcher ein Teil des programmierbaren Festwertspeichers der digitalen Steuereinheit gemäß Fig. 1 ist, weist acht Eingänge $A_0$ bis $A_7$ für die Adressen eines (in der Figur nicht dargestellten) Zeilenzählers und vier Programmiereingänge $I_1$ bis $I_4$ auf. Vier Ausgänge $O_1$ bis $O_4$ sind einerseits mit einem Verteiler für die Anfangswertbildung (Multiplexer 402) und andererseits mit einem Baustein zur Mittelwertbildung 403 verbunden. Der Multiplexer 402 besteht aus Gattern, die von jeweils zwei RS-Flip-Flops gesteuert werden, wobei die Steuerung adreßabhängig ist.

Vom Multiplexer 402 gehen neun Leitungen zu den Eingängen $A_1$ bis $A_9$ eines 9-bit-Addierers 404, welcher durch eine Reihe von Gattern gebildet ist. Der Addierer 404 weist neun Ausgänge $\Sigma_1$ bis $\Sigma_9$ auf, welche einerseits zu den Eingängen $A_1$ bis $A_9$ eines 9-bit-Differenzzählers 405, z. B. durch 9 Flip-Flops, gebildet, und andererseits zu einem 9-bit-Zwischenspeicher 406 (9 D-Flip-Flops) mit den Eingängen $D_1$ bis $D_9$ führen. Der 9-bit-Differenzzähler 405 weist außerdem Eingänge für die Taktfrequenz T (8,86 MHz) und $\overline{S}$ für die Horizontalfrequenz $f_H$ auf. Der Ausgang des Differenzzählers 405 führt einerseits zur Vertikalablenk-Endstufe 407 und andererseits zum Freigabeeingang FE. Der Zwischenspeicher 406 weist neben den Eingängen $D_1$ bis $D_9$ Eingänge T für die Horizontalfrequenz $f_H$ und für einen Rücksetzimpuls $\overline{R}$ auf.

Vom Speicher 401 führt ein Ausgang $O_5$ zur Steuerbitaufbereitung 408, welche aus Gattern besteht. Von der Steuerbitaufbereitung 408 wird ein Zweierkomplement-Bildner 409 angesteuert, dessen drei Ausgänge $\Sigma_1$ bis $\Sigma_3$ zum Multiplexer 402 führen. Der Baustein zur Mittelwertbildung 403 enthält einen 3-bit-Komparator 410, der aus Gattern besteht und über zwei ODER-Glieder 411, 412, zwei UND-Glieder 413, 414 und ein NAND-Glied 415 mit einem 3-bit-Addierer 416 (aus Gattern gebildet) verknüpft ist. Weiterhin enthält der Mittelwertbildner 403 ein 3-bit-Latch 417 (3 D-Flip-Flops), welcher über ein ODER-Glied 418 die Horizontalfrequenz $f_H$ bzw. die Adresse $2^0$ am Eingang T erhält. Das 3-bit-Latch 417 weist die Eingänge $D_1$ bis $D_3$ und die Ausgänge $Q_1$ bis $Q_3$ auf. Der 3-bit-Komparator 410 hat die Eingänge $A_1$ bis $A_3$ vom 3-bit-Latch 417 und die Eingänge $B_1$ bis $B_3$ vom Speicher 401. Ferner hat der 3-bit-Komparator 410 drei Ausgänge für $A=B$, $A>B$ und $A<B$. Der 3-bit-Addierer 416 hat drei Eingänge $B_1$ bis $B_3$ vom Speicher 401 und einen Eingang $A_1$ vom 3-bit-Komparator 410. Während der 9-bit-Addierer 404, der 9-bit-Differenzzähler 405 und der 9-bit-Zwischenspeicher 406 die obere Bildhälfte der Vertikalablenk-Endstufe 407 ansteuern, wird die untere Bildhälfte vom 9-bit-Addierer 420, dem 9-bit-Differenzzähler 421, dem 9-bit-Zwischenspeicher 422 angesteuert. Vor den 9-bit-Addierer 420 ist eine Datensperre 424 vorgeschaltet, welche von der Steuerbitaufbereitung 408 angesteuert wird.

Die analoge Vertikalablenk-Endstufe 407 besteht aus einem npn-Transistor 425, dessen Basis über das NAND-Glied 419 angesteuert wird. Ferner liegt der Emitter des Transistors 425 auf Masse. Der Kollektor des Transistors 425 ist über eine Diode 427, eine Drossel 428 und eine Wicklung 429 (auf dem Zeilentrafo) mit den Vertikalablenkspulen 430, 431 verbunden. Das andere Ende der Spule 431 liegt ebenfalls auf Masse. Das der Wicklung 429 zugewandte Ende der Spule 430 ist über einen Integrationskondensator 432 mit Masse verbunden.

Weiterhin weist die Vertikalablenk-Endstufe 407 einen pnp-Transistor 433 auf, dessen Basissignal vom Ausgang des Zählers 405 abgeleitet wird. Der Emitter des Transistors 433 liegt auf Masse. Ferner ist der Kollektor des Transistors 433 über die Diode 435, die Drossel 436, die Wicklung 437 (auf dem Zeilentransformator) mit den Spulen 430, 431 verbunden.

Mit dem Transistor 425 wird die obere Bildhälfte und mit dem Transistor 433 die untere Bildhälfte angesteuert.

Die Vertikalablenk-Endstufe 407 arbeitet in Gegentakt-D-Betrieb und wird mit der Hinlaufspannung aus der Zeilen-Endstufe gespeist. Für die Ansteuerung dieser Vertikal-Endstufe werden zwei zeilenfrequente Rechteckimpulse mit ansteigender bzw. abnehmender Impulsbreite benötigt. Das Ansteigen bzw. Abnehmen der Impulsbreite von Zeile zu Zeile innerhalb eines Halbbildes wird von der Logikschaltung gemäß Fig. 4 bestimmt.

Ein zehnstufiger Binärzähler, der aus 10 Flip-Flops aufgebaut ist (in der Figur nicht dargestellt) und als asynchroner oder synchroner Zähler ausgeführt sein kann, wird an seinem Takteingang mit Impulsen der doppelten Zeilenfrequenz angesteuert. An den acht höherwertigen Stellen dieses Zählers können 8-bit-Adressen abgegriffen werden, wobei eine Adresse zwei Zeilen eines Halbbildes entspricht. Diese 8-bit-Adressen werden auf die Adreßeingänge $A_0$ bis $A_7$ des Speichers 401 gelegt. Der Speicher kann, wie bereits beschrieben, als PROM, EPROM, EAROM oder als batteriegepuffertes RAM ausgeführt sein.

Zur Erzeugung der obengenannten Rechteckimpulse in einem D/A-Wandler wird pro Zeile bei der erforderlichen Auflösung ein 9-bit-Wort benötigt. Zur Einsparung von Speicherplätzen werden nicht die 9-bit-Wörter je Zeile, sondern die Änderung dieser 9-bit-Wörter von Adresse zu Adresse (eine Adresse entspricht zwei Zeilen eines Halbbildes) abgespeichert. Dadurch reduziert sich der Speicherplatzbedarf von $312 \times 9$ bit auf $156 \times 5$ bit. Diese 5-bit-Wörter werden in der Logikschaltung gemäß Fig. 4 zu den für den D/A-Wandler benötigten 9-bit-Wörtern aufbereitet. Zur Bildung des Rechteckimpulses mit ansteigender Impulsbreite wird auf das 9-bit-Wort der vorherigen Zeilen ein bestimmter Wert aus dem Speicher addiert, beim Rechteckimpuls mit abnehmender Impulsbreite entsprechend subtrahiert (größere Impulsbreite entspricht höherem Wert des 9-bit-Wortes).

Für die Rechteckimpulse mit abnehmender Impulsbreite muß am Bildanfang ein sogenannter Anfangswert gebildet werden, von diesem werden dann die entsprechenden, aus dem Speicher 401 ausgelesenen Werte subtrahiert. Dieser Anfangswert ist ein 9-bit-Wort und ebenfalls in dem Speicher 401 abgespeichert. Das 9-bit-Wort kann in den 5-bit-organisierten Speicher nicht direkt abgespeichert werden. Deswegen wird das 9., höchstwertige Bit fest verdrahtet und die vier höherwertigen Bits unter der Adresse 0 und die vier niederwertigen Bits unter der Adresse 1 abgespeichert. Diese 4-bit-Wörter werden mit der folgend angeführten Schaltung zu dem 9-bit-Anfangswert zusammengesetzt.

Die Ausgänge $O_1$ bis $O_4$ des Speichers 401 werden während der Adresse 0 über den Multiplexer 402 auf die Eingänge $A_5$ bis $A_8$ des 9-bit-Volladdierers 404 geschaltet. Eingang $A_9$ des Addierers 404 liegt auf logisch 1. Die übrigen A-Eingänge des Addierers 404 liegen gleichzeitig auf logisch 0. Die Eingänge $B_1$ bis $B_9$ sind mit den Ausgängen $Q_1$ bis $Q_9$ des Zwischenspeichers 406 (ausgeführt als flankengesteuerte D-Flip-Flops) zusammengeschaltet.

Der Zwischenspeicher 406 wird am Bildanfang mit einem bildfrequenten Impuls auf logisch 0 gesetzt. An den B-Eingängen des Addierers 404 liegt damit während der Adresse 0 ebenfalls logisch 0. An den Addierausgängen $\Sigma_5$ bis $\Sigma_8$

erscheint damit das an den Eingängen $A_5$ bis $A_8$ anstehende 4-bit-Wort und am Addierausgang $\Sigma_9$ logisch 1. Die übrigen $\Sigma$-Ausgänge führen logisch 0.

Die Ausgänge $\Sigma_1$ bis $\Sigma_9$ sind mit den Vorwahleingängen $A_1$ bis $A_9$ des neunstufigen binären Synchronzählers 405 verbunden. Außerdem sind die Ausgänge des Addierers 404 mit den Dateneingängen $D_1$ bis $D_9$ des Zwischenspeichers 406 verbunden.

Etwa 2 µs, nachdem die Daten an den Vorwahleingängen des Synchronzählers und an den Eingängen des Zwischenspeichers 406 anstehen, liegt am Stelleingang $\overline{S}$ des Synchronzählers 405 und am Takteingang T des Zwischenspeichers 406 ein Impuls an, und die Daten werden in den Zwischenspeicher 406 und den Synchronzähler 405 übernommen. Der Ausgang des Synchronzählers 405 ist mit seinen Freigabeeingang FE verbunden.

Am Takteingang des Zählers 405 liegt die doppelte Farbhilfsträgerfrequenz (8,86 MHz) oder eine andere quarzstabile Frequenz ähnlicher Periodendauer.

Mit dem Impuls am $\overline{S}$-Eingang werden die Daten des Vorwahleingangs übernommen, und der Zähler 405 beginnt nun von diesen Datenwerten an zu zählen. Ein Zähltakt entspricht ca. 100 ns. Hat der Zähler den Stand erreicht, daß sein Ausgang logisch 1 ist (entspricht dezimal 511), wird er über seinen Freigabeeingang FE gestoppt. Der Zeitpunkt, an welchem der Zählerstand 511 erreicht wird, ist dadurch direkt abhängig vom Datenwert am Vorwahleingang.

Während des Zählvorgangs liegt am Ausgang des Zählers logisch 0, vom Ende des Zählvorgangs bis zum nächsten Impuls (in der darauffolgenden Zeile) am Stelleingang $\overline{S}$ logisch 1 an. Es entsteht somit am Ausgang des Zählers 405 ein zeilenfrequenter Rechteckimpuls, dessen Impulsbreite vom Datenwert an den Vorwahleingängen abhängig ist. Dieser Rechteckimpuls dient zur Ansteuerung der Vertikalablenk-Endstufe 407.

Bei der Adresse 1 werden die vier niederwertigen Bits des Anfangswertes aus dem Speicher 401 ausgelesen. Der Multiplexer 402 hat in der Zwischenzeit die Speicherausgänge $O_1$ bis $O_4$ auf die Eingänge $A_1$ bis $A_4$ des Addierers 404 gelegt. Die Daten aus Adresse 1 liegen damit an den Addiereingängen. An den Addiereingängen B liegen die fünf höherwertigen Bits des Anfangswertes, welche sich im Zwischenspeicher 406 befinden, stellenrichtig an. Am Ausgang des Addierers 404 steht jetzt der 9-bit-Anfangswert zur Verfügung. Beim Stellimpuls wird dieser Wert wieder in den Synchronzähler 405 und den Zwischenspeicher 406 übernommen. Die Abarbeitung im Synchronzähler 405 geschieht, wie bereits unter der Adresse 0 beschrieben, und bestimmt die Rechteckimpulsbreite für die Zeilen 3 und 4.

Von der Adresse 2 bis zur Adresse 155 sind die Differenzwerte als 4-bit-Wörter abgespeichert. Das fünfte Bit ist ein Steuerbit. Diese Daten müssen, bevor sie auf die Addierstufen gegeben werden, aufbereitet werden.

Das unter jeder Adresse angespeicherte 4-bit-Wort muß auf die zu der jeweiligen Adresse gehörigen zwei Zeilen verteilt werden. Diese Aufgabe übernimmt die Schaltung zur Mittelwertbildung 403. Der Multiplexer 402 am Ausgang des Speichers 401 schaltet deshalb von Adresse 2 bis Adresse 155 die Speicherausgänge $O_1$ bis $O_4$ auf die Eingänge des Mittelwertbildners 403. Die drei höherwertigen Bits gelangen an die Dateneingänge $D_1$ bis $D_3$ des 3-bit-Zwischenspeichers 417, an die Eingänge $B_1$ bis $B_3$ des Komparators 410 und an die Eingänge $B_1$ bis $B_3$ des 3-bit-Volladdierers 416. Am Ausgang $\Sigma_1$ bis $\Sigma_3$ des Addierers 416 steht der durch zwei dividierte Datenwert (verschieben um eine Stelle nach rechts) zur Verfügung. Handelt es sich bei dem am Mittelwertbildnereingang anstehenden Wert ($O_1$ bis $O_4$) um eine gerade Zahl, steht am Ausgang direkt der durch zwei dividierte Wert ($O_2$ bis $O_4$) zur Verfügung, welcher für diese beiden Zeilen weiter verarbeitet werden kann. Ist $O_1$ bis $O_4$ dagegen eine ungerade Zahl, entsteht bei der Division ein Rest (niederwertigste Stelle $O_1$ entspricht logisch 1), der berücksichtigt werden muß. Die Entscheidung, ob dieser Rest bei der ersten oder zweiten Zeile der jeweiligen Adresse addiert werden soll, wird von dem 3-bit-Komparator 410 getroffen. Er vergleicht den halbierten Wert der vorherigen Adresse (wird im 3-bit-Latch 417 zwischengespeichert) mit dem halbierten Wert der anstehenden Adresse. Ist der Datenwert der erstgenannten Adresse größer oder gleich der zweitgenannten, wird der Rest zur ersten Zeile, andernfalls zur zweiten Zeile addiert. Die Addition des Restes erfolgt im 3-bit-Volladdierer 416.

Am Ausgang des Mittelwertbildners 403 stehen damit die Differenzwerte von Zeile zu Zeile zur Verfügung. Zur Erzeugung der Rechteckimpulse mit abnehmender Impulsbreite (obere Bildhälfte, begonnen wird am oberen Bildrand) müssen diese Differenzwerte vom obengenannten Anfangswert subtrahiert, für die Rechteckimpulse mit zunehmender Impulsbreite von 0 an addiert werden. Für die Addition (untere Bildhälfte mit Beginn in Bildmitte) können die Differenzwerte über die Datensperre 424 auf den Eingang des 9-bit-Volladdierers 420 gegeben und die Rechteckimpulse, wie oben beschrieben, mit dem Synchronzähler 421 erzeugt werden.

Für die Subtraktion muß zuerst von den Differenzwerten das Zweier-Komplement (Komplementbildung und logisch 1 addieren) gebildet und dann auf die Eingänge des Addierers 404 gegeben werden. Die Erzeugung der Rechteckimpulse im Synchronzähler 405 geschieht wie oben beschrieben.

Es ist nun erwünscht, mit der Addition nicht schon am Bildanfang oder erst in Bildmitte, sondern im Laufe der ersten Bildhälfte zu beginnen, und die Subtraktion soll nicht in Bildmitte, sondern erst im Laufe der zweiten Bildhälfte gestoppt werden können (Überlappung). Dies wird mit dem Steuerbit, welches am Ausgang O5 des Speichers 401 bei jeder Adresse zur Verfügung steht, erreicht. Zwischen Mittelwertbildner-Ausgang und Eingang des 9-bit-Addierers 420 ist die Datensperre 424, bestehend aus drei UND-Gliedern mit je zwei Eingängen, angeordnet. An je einem Eingang liegen die Differenzwerte, die anderen drei Eingänge sind mit der Steuerbitleitung verbunden. Eine Addition der Differenzwerte in der ersten Bildhälfte kann nur erfolgen, wenn die Steuerbitleitung logisch 1 führt, andernfalls ergibt sich an allen Ausgängen der Datensperre logisch 0 (keine Addition).

Der Zweierkomplementbildner 409, dessen Ausgänge zum 9-bit-Addierer 404 für die Subtraktion führen, besitzt einen Steuereingang SE, mit welchem die Ausgänge des Komplementbildners auf logisch 0 gelegt werden können. Dieser Steuereingang ist mit der Steuerbitleitung verbunden. Damit kann in der zweiten Bildhälfte mit Hilfe des Steuerbits die Subtraktion unterbunden werden.

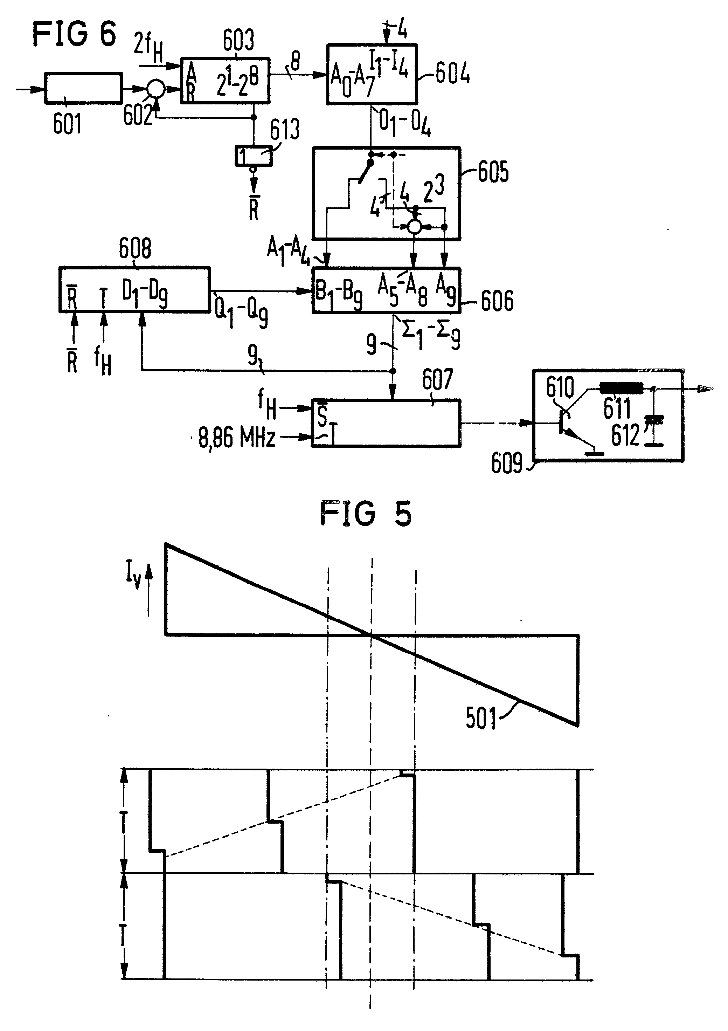

In Fig. 5 ist der Vertikalablenkstrom $I_v$ in Abhängigkeit von der Zeile dargestellt. Für die Kurve 501 entspricht dabei der linke Bildrand der 1. bzw. 313. Zeile und der rechte Bildrand der 312. bzw. 625. Zeile.

Im zweiten Teil der Fig. 5 sind die Ansteuerimpulse T für die npn-Stufe der Vertikalablenkung (erstes Halbbild, Zeile 1 bis 312) und im untersten Teil der Fig. 5 die Ansteuerimpulse T für die pnp-Stufe der Vertikalablenkung (zweites Halbbild, Zeile 313 bis Zeile 625) dargestellt. Weiterhin ist in der Fig. 5 der Bereich der Überlappung in Bildmitte dargestellt.

Für eine Endstufe, die nicht im Gegentaktbetrieb arbeitet oder aus anderen Gründen keine Stromüberlappung in Bildmitte benötigt, können die vom Anfangswert zu subtrahierenden Datenwerte schon als Zweierkomplement abgespeichert werden, so daß in diesem Fall die Funktion für Steuerbitaufbereitung 408, für Zweierkomplementbildung 409, für 9-bit-Zwischenspeicher 422, für 9-bit-Differenzzähler 421, für 9-bit-Addierer 420 und für Datensperre 424 entfallen können.

Fig. 6 zeigt ein Prinzipschaltbild der Logikstufe zur Ansteuerung der Rasterkorrektur-Endstufe. Ein Vertikal-Synchronimpuls wird über die Vertikal-Impuls-Aufbereitung 601 und das ODER-Glied 602 an den Zeilenzähler 603 gelegt. Der 9-bit-Zeilenzähler 603 besteht z. B. aus 9-Flip-Flops und besitzt einen Rücksetzeingang R und einen Zähleingang A für die Frequenz $2f_H$. Die acht Ausgänge des Zeilenzählers 603 sind mit acht Eingängen $A_0$ bis $A_7$ des Speichers 604 verbunden. Der Speicher 604 ist als 156 × 4-bit-Speicher ausgebildet und kann mit dem Speicher 401 der Fig. 4 zum programmierbaren Festwertspeicher 116 gemäß Fig. 1 vereinigt sein.

Weiterhin weist die Logikschaltung zur Ansteuerung der Rasterkorrektur-Endstufe in gleicher Weise wie die Logikschaltung zur Ansteuerung der Vertikalablenk-Endstufe (siehe Fig. 4) einen Multiplexer 605, einen Addierer 606, einen Differenzzähler 607 und einen Zwischenspeicher 608 auf. Vom Differenzzähler 607 werden die Impulse zur Rasterkorrektur-Endstufe 609 geleitet. Die Rasterkorrektur-Endstufe 609 besteht aus einem npn-Transistor 610, dessen Basis vom Zähler 607 angesteuert wird und dessen Emitter auf Masse liegt. Der Kollektor des Transistors 610 ist über eine Wicklung 611 und den Kondensator 612 mit Masse verbunden; andererseits führt vom Kollektor über die Wicklung 611 der Anschluß zur Horizontalablenk-Endstufe. Das NAND-Glied 613 liefert einen Rücksetz-Impuls $\bar{R}$.

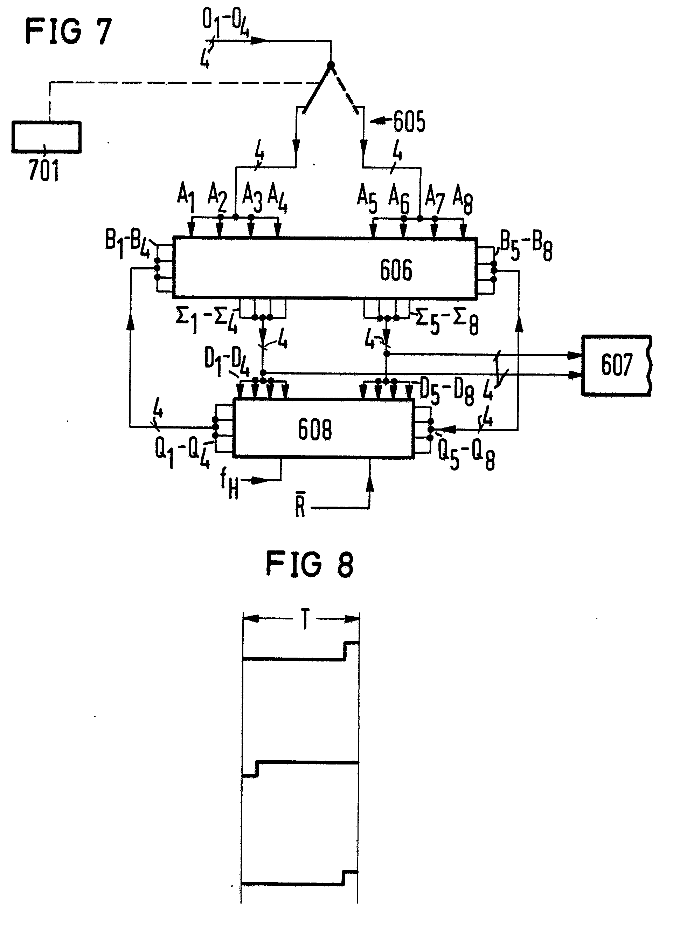

In Fig. 7 ist ein vergrößerter Teilausschnitt der Fig. 6 mit der Darstellung der Anfangswertbildung gezeigt. Im Multiplexer 605 ist die Weichenstellung für die Zeile 1 gestrichelt und die Weichenstellung für alle übrigen Zeilen ausgezogen dargestellt. Die Weichenstellung wird dabei vom Weichensteller 701 veranlaßt. Weiterhin ist in Fig. 7 die Addierstufe 606, der 9-bit-Zwischenspeicher 608 sowie ein Teil des Differenzzählers 607 zu erkennen.

Die in der Fig. 6 dargestellte Schaltung dient zur Beseitigung der Ost/West-Rasterverzerrung, die einen konkav-parabelförmigen Verlauf, meist mit Fehlermaximum in der horizontalen Bildmittenlinie, hat. Dazu müssen die Längen der einzelnen Zeilen in Abhängigkeit von ihrer momentanen vertikalen Auslenkung variabel sein. Die dargestellte Schaltung steuert z. B. eine Diodenmodulator-Endstufe für D-Betrieb an, deren Stromfluß von der Impulsbreite des Ansteuersignals bestimmt wird.

Der binäre Zeilenimpulszähler 603, der z. B. aus 9-Flip-Flops aufgebaut ist, bildet Speicheradressen für die einzelnen Zeilen. Im Speicher 604 wird dann unter jeder Adresse ein für die zugehörige Zeile typischer Binärwert abgelegt, der ihre Länge bestimmt. Diese Zeilenlängeninformation gelangen nun Zeile für Zeile an die Dateneingänge des Synchronzählers 607, dem außerdem eine Taktfrequenz, die sehr viel größer als die Zeilenfrequenz ist, zugeführt wird. Am Zeilenanfang beginnt der Zähler 603 von dem eingegebenen Datenwert an aufwärts zu zählen bis zu einer durch Verdrahtung festgelegten Zahl. Während er zählt, hat sein Ausgang den Zustand 0, sonst 1. Die binären Datenwerte des Speichers 604 werden also in Impulsbreiten umgesetzt, mit denen die Endstufe angesteuert werden kann.

Es hat sich nun herausgestellt, daß eine Adressierung von je vier Zeilen (d. h. jede zweite Zeile eines Halbbildes) eine ausreichende Korrekturauflösung ergibt. Der Speicher braucht also nur 156 statt 312 Adressen zu haben. Um eine einheitliche Speicherorganisation zu erhalten, werden, wie vorstehend beschrieben, auch für die Vertikalablenkung nur 156 Adressen gebildet. Die fehlenden Zwischenwerte für die nichtprogrammierten Zeilen werden dann mit Hilfe der bei Fig. 4 beschriebenen Interpolations-

logik (Mittelwertbildner 403) gewonnen.

Adreßzähler 603 und Speicher 604 können somit für die Rasterkorrektur und die Vertikalablenkung identisch sein.

Die volle Zeilenlänge ist in einer 9-bit-Information festgelegt. Da nur ein verhältnismäßig kleiner Anteil für Rasterkorrektur-Modulation und Bildbreiteneinstellung variabel sein muß und der Rest konstant bleibt, ist es zweckmäßig, den Konstantwert zu Beginn einer vertikalen Ablenkperiode einmalig zu speichern und in den folgenden Adressen nur die Differenz zur vorherigen Adresse festzulegen.

Dieser konstante Anfangswert ist mit einem 8-bit-Ausdruck definiert, dessen höherwertige vier Bits in Adresse 0 und der Rest in Adresse 1 deponiert sind. Unter den folgenden Adressen ist jeweils nur die Differenz zwischen der aktuellen und der vorhergegangenen Adresse eingespeichert.

Zur Erzeugung des Anfangswertes werden bei Adresse 0 die Datenausgänge $O_1$ bis $O_4$ (höherwertig) über eine Weiche des Multiplexers 605 auf die A-Eingänge 5 bis 8 des Addierers 606 gelegt. Da an den B-Eingängen des Addierers 606 keine Information vorliegt, stellt sich an den $\Sigma$-Ausgängen 5 bis 8 das Wort $0_1$ bis $0_4$ der Adresse 0 ein. Alle Ausgänge des Addierers 606 sind sowohl mit den Dateneingängen des Synchronzählers 607 als auch mit den D-Eingängen des Zwischenspeichers 608 verbunden. Die Ausgänge des Zwischenspeichers 608 übernehmen die Eingangsinformationen mit einem Taktimpuls, der jeweils zu Zeilenbeginn auftritt.

Die Ausgänge des Zwischenspeichers 608 sind auf die B-Eingänge der Addierstufe 606 zugeführt $(A + B = \Sigma)$.

Um eine Verdoppelung des Anfangswertes über den Kreislauf Addierer 606 – Zwischenspeicher 608 – Addierer 606 zu vermeiden, wird der Taktimpuls des Zwischenspeichers 608 für die Zeile 2 unterdrückt und die Weiche des Multiplexers 605 vor Beginn der Zeile 2 (immer noch Adresse 0) umgeschaltet. Die vier höherwertigen Bits stehen jetzt an den vier »niederwertigen« Addiereingängen $A_1$ bis $A_4$. Das heißt, Zeile 1 wird gebildet von den vier höherwertigen Bits der Adresse 0 und die Zeile 2 aus der Summe der vier höherwertigen Bits an den Addiereingängen $A_1$ bis $A_4$ und $B_5$ bis $B_8$, weil vorher der Taktimpuls für die Zeile 1 die Addierausgänge $\Sigma_5$ bis $\Sigma_8$ über den Zwischenspeicher 608 an die B-Eingänge 5 bis 8 des Addierers 606 gelegt hatte.

Für die Adresse 1 werden die Addiereingänge $A_4$ bis $A_8$ auf 0 gelegt und die Eingänge $B_4$ bis $B_8$ auf $0_1$ bis $0_4$ der Adresse 0. An $A_1$ bis $A_4$ stehen die vier niederwertigen Bits des Anfangswertes an, so daß die Summe aus

$$(0_1 \text{ bis } 0_4)_{\text{Adr.1}} + (0_1 \text{ bis } 0_4)_{\text{Adr.0}},$$

welches dem Anfangswert entspricht, zum Differenzzähler gelangt. Eine Verdoppelung der vier niederwertigen Bits über den Kreislauf wird durch Unterdrücken des Taktimpulses in Zeile 4 vermieden.

Die folgenden Adressen liefern an die A-Eingänge nur noch die Differenzen zu ihren Voradressen, deren Inhalt über den Zwischenspeicher 608 gleichzeitig an den B-Eingängen des Addierers 606 stehen. Somit gilt

$$\Sigma_m = D_m + \Sigma_{m-1}, m = 2, 3, 4, \dots 155,$$

wobei der Inhalt $D_m$ immer für 2 Nachbarzeilen im Halbbild steht.

Bei den Extremwerten der Fehleramplitude (normalerweise nur einer in Bildmitte) ändern die Korrekturwerte ihre Vorzeichen. Der Speicher enthält für die Subtrahierphasen bereits das Zweierkomplement des Korrekturwertes.

Bei der Addition des Zweierkomplements müssen die freien Stellen des 9-bit-Wortes, von dem pro Adresse nur der variable Teil geliefert wird, mit 1 aufgefüllt werden. Deshalb hat die Information am Speicherausgang $O_4$ während der Subtrahierphase den Wert 1 (sonst 0) und wird von der Weiche des Multiplexers 605 (außer während der Anfangswertbildung) auf die Addiereingänge $A_5$ bis $A_9$ gelegt.

Am Ende jeder Vertikalablenkperiode werden die D-Flip-Flops des Zwischenspeichers 608 zurückgesetzt.

Der 9-bit-Differenzzähler 607 zählt wie in der Ansteuerschaltung für die Vertikalablenkung von dem an seinen Dateneingängen stehenden Wert mit einem Takt von 8,86 MHz bis 511 und wird dann angehalten. Mit Beginn jeder Zeilenperiode übernimmt er neue Daten vom Addierer 606. Sein Ausgang liegt während des Zählens auf 0 und sonst bis zum Ende der Zeilenperiode auf 1.

Es entsteht somit eine Impulsreihe mit von den Korrekturdaten abhängigen variablen Tastverhältnissen zur Steuerung des Stromflusses in der analog arbeitenden Endstufe.

In Fig. 8 ist die Funktion der Ost/West-Korrektur für die Zeilenperiode T dargestellt. Oben und unten wird mit kleinem Datenwert gezählt, während für die Mitte der Datenwert groß ist.

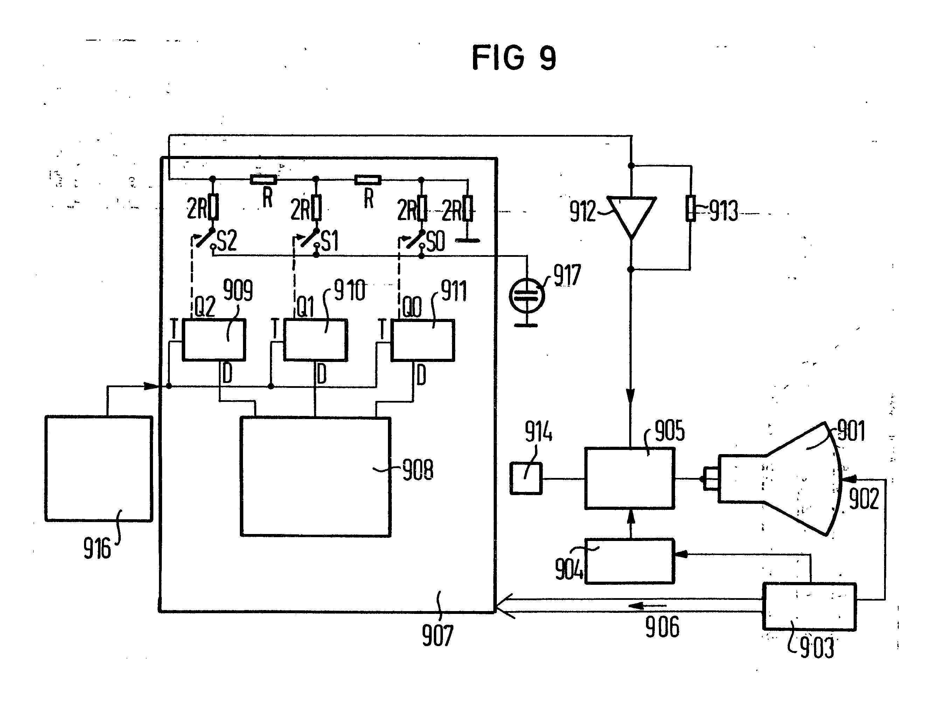

In Fig. 9 ist ein Prinzipschaltbild für die automatische Abgleichung der analogen Signalstufen eines Farbfernsehers mit digitaler Steuereinheit dargestellt. Die Bildröhre 901 wird mit einem Sensorsystem 902 abgetastet, welches an einen Abgleichrechner 903 angeschlossen ist. Der Abgleichrechner 903 ist mit einem Bildmustergenerator 904 verbunden, der seinerseits mit den analogen Signalstufen 905 verbunden ist. Andererseits ist der Abgleichrechner 903 über eine Datenübertragungsleitung 906 mit einer Schaltung 907 in der digitalen Steuereinheit verbunden, die zum Abgleich der Analogstufen dient. Im Abgleichteil 907 ist der programmierbare Festwertspeicher 908 zu erkennen, welcher über D-Flip-Flops 909, 910, 911 mit als Stellglieder wirkenden sogenannten 2 R-R-Widerstandsnetzwerken verbunden ist, welche die binären Datenwerte in Stromgrößen umsetzen. Diese werden dann über den Operationsverstärker 912, dem ein Widerstand 913 parallel geschaltet ist, den analogen Signalstufen 905 als Abgleichspannung zugeführt. Die analogen Signalstufen 905 werden von den HF- bzw. ZF-Stufen 914 angesteuert.

Ferner ist in der Fig. 9 ein Adreßzähler und Taktgeber 916 zu erkennen, welcher für die Einschalt- oder Rücklaufphase benötigt wird.

Das Abgleichteil 907 wird mit einer Referenzspannung aus einer Gleichspannungsquelle versorgt.

Das Sensorsystem 902 erfaßt während des Abgleichs an Hand einer vom Bildmustergenerator 904 auf dem Bildschirm 901 dargestellten Vorlage oder durch Messung elektrischer Größen in der Schaltung die Istwerte und übermittelt sie dem Abgleichrechner 903. Diese Istwerte werden durch den Rechner 903 und eine interne Steuereinheit so lange verändert, bis sie ihre Sollwerte erreicht haben. Diese werden dann im RAM des Abgleichspeichers zwischengespeichert und später in den Festwertspeicher 908 übertragen.

Die Vergleichsgrößen können dabei im Abgleichrechner 903 gespeichert oder durch die Position von Sensoren vor dem Bildschirm gegeben sein.

Abgleich des Weißwertes

Wenn beim Betrachter eines Farbfernseh-Bildes der Eindruck Weiß entstehen soll, müssen die Intensitäten der drei Grundfarben Rot, Grün und Blau in einem ganz bestimmten Verhältnis $(0,3 R + 0,59 G + 0,11 B)$ zueinander stehen. Dies wird über die Verstärkung der drei Farbendstufen, welche die Bildröhrenelektroden ansteuern, eingestellt. Diese bekannten Sollwerte werden im Abgleichrechner 903 fest abgespeichert und mit dem vom Sensorsystem 902 gelieferten Istwerten verglichen.

Der Rechner 903 ändert nun über die externe Datenübertragungsleitung 906 und den Abgleichteil 907 die Verstärkung der Farbstufen so lange, bis die Soll-Ist-Differenz zu 0 geworden ist.

Das Sensorsystem 902 ist vor dem Bildschirm angeordnet und kann z. B. aus drei Fotodioden bestehen, von denen jede über eine Filteranordnung jeweils nur das Licht einer der drei Farbarten empfängt.

Die Endwerte werden als Binärwerte zunächst im flüchtigen Speicher (RAM) des Rechners 903 festgehalten und nach Beendigung des Abgleichs in den Festwertspeicher 908 übertragen, welcher im Fernseheinsatz an Stelle des Abgleichrechners die Betriebsdaten liefert.

Die Daten steuern die an Stelle der heutigen Potentiometer eingeführten digitalen Stellglieder und müssen bei eingeschaltetem Gerät ständig zur Verfügung stehen.

So kann z. B. jedesmal beim Einschalten des Gerätes eine Zählerschaltung die betreffenden Adressen des Festwertspeichers 908 aufrufen und somit dessen Inhalt Zwischenspeichern (z. B. D-Flip-Flops, Schieberegister oder Ladungsspeicher, sogenannte CCD) zuführen, an deren Ausgang sie während der gesamten Einschaltdauer anstehen.

Weiterhin besteht die Möglichkeit, das Abfragen der Adressen periodisch während der nicht sichtbaren Rücklaufphasen des Elektronenstrahls zu wiederholen.

Als Stellglieder werden gemäß Fig. 9 die sogenannten 2-R-R- oder R-2ⁿ-Widerstandsnetzwerke verwendet, welche die binären Datenwerte in Stromgrößen umsetzen.

In gleicher Weise können weitere Positionen der analogen Signalstufen, wie z. B. Graubalance, Strahlstrombegrenzung und Bildröhrenarbeitspunkt, abgeglichen werden. Unabhängig von der Wortbreite des Speichers 908 können die Daten beim Auslesen durch Multiplexer beliebig vielen Zwischenspeichern zugeführt werden.

Der Abgleich von Positionen, die erfahrungsgemäß im Laufe der Gerätelebensdauer nachgestellt werden müssen, kann so erfolgen, daß die Potentiometer beibehalten werden, aber mittels eines motorgetriebenen Abgleichwerkzeugs, dessen Antrieb vom Sensor über den Abgleichrechner gesteuert wird, justiert werden.

Der Speicher 908 ist zweckmäßig so ausgelegt, daß er sowohl für die digitalen Impulsstufen als auch die analogen Signalstufen die erforderlichen Speicherplätze aufweist. Beispielsweise für 10 Abgleichpositionen der analogen Signalstufen mit insgesamt 64 bit wird der Speicher von $156 \times 8$ bit auf $164 \times 8$ bit vergrößert.

Abgleich der Ost/West-Rasterkorrektur und der Vertikalablenkung

Eine Ost/West-Rasterkorrekturschaltung hat die Aufgabe, die aufgrund der Bildröhrengeometrie kissenförmig nach innen gewölbten vertikalen Rasterlinien zu begradigen. Dazu müssen die Zeilenablenkströme zur Bildmitte hin vergrößert werden.

Der Ablenkwinkel ist proportional dem Ablenkstrom und wird durch die Größe einer im Festwertspeicher 908 unter der betreffenden Adresse abgelegten Binärzahl bestimmt.

Im automatischen Abgleich wird vom Bildmustergenerator 904 eine vertikale helle Linie auf dem Bildschirm 901 erzeugt. Ihr Abstand von der Bildschirmmitte ist ein Maß für die Zeilenlänge. Als Sensorsystem 902 dient z. B. eine Fotodiode, die mittels eines Motors auf einer Schiene am (z. B. linken) Bildrand mit einer festgelegten Geschwindigkeit von oben nach unten bewegt werden kann. Da nur jeder zweiten Zeile eines Halbbildes, d. h. jeder vierten eines Vollbildes, Adresse und Daten zugeordnet werden, muß die Geschwindigkeit des bewegten Sensorsystems 902 so sein, daß es sich bei jedem Bilddurchlauf des Elektronenstrahls noch in der zu adressierenden Zeilengruppe befindet. Alternativ zu der bewegten Fotodiode könnte auch ein Sensorsystem 902 aus einer Leiste mit einer den 156 Adressen entsprechenden Anzahl Dioden angebracht werden. Die Richtungs- und Ansprechempfindlichkeit der als Sensor dienenden Fotodioden kann mit optischen Mitteln, wie z. B. Linsen und Blenden, verbessert werden.

Der Abgleichrechner 908 erhöht mit Beginn der Justierung den Datenwert für die erste Zeile (wobei diese sich entsprechend verbreitert) so lange, bis das oben angeführte Bildmuster den Sensorwert erreicht und somit eine Information an den Rechner 903 auslöst. Die erste Zeile hat nun die gewünschte Länge und ihr Datenwert wird aufgrund der Sensormeldung nicht mehr erhöht, sondern als 8-bit-Anfangswert unter den Adressen 0 und 1 im RAM des Rechners 903 zwischengespeichert. Der Vorgang wiederholt sich nun für jede vierte Zeile, wobei nur die Datenänderung gegenüber der vorangegangenen Adresse festgehalten werden, d. h., für die Zeilen werden die Differenzen

$$\Delta D_n = D_n - D_{n-4}$$

gespeichert, wobei $D_0$ definitionsgemäß dem Anfangswert entpricht und $n = 4, 8, 12 \ldots$ sein kann.

Der maximale Korrekturwert fällt normalerweise mit der horizontalen Mittellinie des Bildschirmes zusammen. Die danach folgenden D-Werte sind also negativ und werden im Abgleichrechner als Zweierkomplement abgespeichert, so daß sich bei der späteren Verarbeitung in den Addierstufen des digitalen Steuersystems eine Subtraktion ergibt.

Die Adressierung des Zwischenspeichers und die Ablenkung des Elektronenstrahls der Bildröhre 901 werden vom Bildmustergenerator 904 synchronisiert. Der Zwischenspeicherinhalt wird nach beendigtem Geräteabgleich in den Festwertspeicher 908 der digitalen Steuereinheit übertragen, welcher die Betriebsdaten für den Farbfernsehempfänger liefert.

Dieses Verfahren hat den Vorteil, daß es unabhängig von den Charakteristika der Stellglieder oder Bildröhren und Ablenksysteme eine exakte Korrektur liefert.

In ähnlicher Weise erfolgt der Abgleich der Vertikalstufen.

Um zunächst überhaupt ein Bildmuster zu erzeugen, ist es zweckmäßig, ein empirisches Programm im Festwertspeicher des Abgleichrechners 903 zu haben. Das oben beschriebene Verfahren, Anwendung einer Fotodiode, welche z. B. mit einem Schrittmotor stufenweise von oben nach unten vor dem Bildschirm bewegt wird, oder die Benutzung der erwähnten Diodenleiste, schreibt dann die exakten Daten in das RAM des Abgleichrechners 903. Auch hier wird als erstes ein Anfangswert gebildet. Für je vier weitere Zeilen wird dann auch nur die Differenz zur vorhergegangenen Adresse ermittelt und abgespeichert.

In der oberen Bildhälfte nehmen Datenwerte bis zur Bildmitte hin ab, d. h., die $\Delta D$ sind negativ. Zwischen Bildmitte und unterem Bildrand sind sie positiv. Durch ein zusätzliches Steuerbit, welches in jedem Datenwert enthalten ist, wird in der digitalen Steuereinheit der Bildmittenstrom (Überlappung) in der Endstufenschaltung bestimmt.

Die erfindungsgemäße digitale Steuereinheit besteht beispielsweise aus einer schnellen Logikschaltung bis ca. 9 MHz (z. B. I²L), einer langsamen Logikschaltung (z. B. MOS-Technologie) und dem programmierbaren Festwertspeicher mit 156 × 8 bit. Der beschriebene vollautomatische Abgleich kann µC-gesteuert geschehen.

**Patentansprüche**

1. Farbfernseh-Empfänger mit automatischem Abgleichsystem, dadurch gekennzeichnet, daß er eine digitale Steuereinheit (106) zur Ansteuerung der Ost/West-Rasterkorrektur- (107), der Horizontalablenk- (108) und der Vertikalablenk- (109) Endstufe enthält, daß die digitale Steuereinheit (106) aus einem Zeilenzähler (113), einem programmierbaren Festwertspeicher (116, 908) und einer Logikschaltung (114) besteht, daß im programmierbaren Festwertspeicher (116, 908) Soll-Werte für die Ost/West-Rasterkorrektur und die Vertikalablenkung gespeichert sind, wobei diese Soll-Werte dadurch erhalten werden, daß bei einem automatischen Abgleich mittels eines Bildmustergenerators (904) ein Testbild auf dem Bildschirm (105, 901) erzeugt wird, das mittels eines Sensorsystems (117, 902) zeilenweise abgetastet wird und dabei durch einen Abgleichrechner (118, 903) die Ist-Werte so lange verändert werden, bis sie mit im Abgleichrechner (118, 903) gespeicherten Soll-Werten übereinstimmen, und dann die korrigierten Ist-Werte als Soll-Werte für das automatische Abgleichsystem mittels einer Datenübertragungsleitung (119, 906) zeilenweise in den programmierbaren Festwertspeicher (116, 908) überführt werden, und daß die Logikschaltung (114) beim Betrieb des Farbfernseh-Empfängers aus den im programmierbaren Festwertspeicher (116, 908) zeilenweise gespeicherten Soll-Werten die Steuerimpulse für die Endstufen (107, 108, 109) bildet.

2. Farbfernseh-Empfänger nach Anspruch 1, dadurch gekennzeichnet, daß im Festwertspeicher (116) nur die Soll-Werte für die erste Zeile enthalten sind und für die Soll-Werte der übrigen Zeilen die Differenz zum Soll-Wert der ersten Zeile abgespeichert ist.

3. Farbfernseh-Empfänger nach Anspruch 1 oder 2, dadurch gekennzeichnet, daß nur die Soll-Werte für jede zweite Zeile eines Halbbildes im Festwertspeicher (116) enthalten sind.

4. Farbfernseh-Empfänger nach Anspruch 3, dadurch gekennzeichnet, daß er einen programmierbaren Festwertspeicher (116) mit 156 × 8 bit

Speicherplätzen enthält.

5. Farbfernseh-Empfänger nach einem der Ansprüche 1 bis 4, dadurch gekennzeichnet, daß die digitale Steuereinheit zusätzlich ein Abgleichteil (907) für analoge Signalstufen (Weißwert, Graubalance, Strahlstrombegrenzung, Bildröhrenarbeitspunkt) enthält, welches einen programmierbaren Festwertspeicher (908) enthält, der über D-Flip-Flops (909, 910, 911) oder CCD-Schieberegister mit als Stellglieder wirkenden 2-R-R- oder R2ⁿ-Widerstandsnetzwerken verbunden ist, die die im Festwertspeicher (908) enthaltenen binären Datenwerte in Stromgrößen umsetzen.

6. Farbfernseh-Empfänger nach Anspruch 5, dadurch gekennzeichnet, daß für die Abgleichpositionen der analogen Signalstufen ein Festwertspeicher (116, 908) mit 64-bit-Speicherplätzen im Farbfernseh-Empfänger enthalten ist.

7. Farbfernseh-Empfänger nach Anspruch 6, dadurch gekennzeichnet, daß er einen Festwertspeicher (116, 908) enthält, in welchem sowohl die Abgleichpositionen für die analogen Signalstufen als auch die Soll-Werte für die digital angesteuerten Endstufen (107, 108, 109) enthalten sind.

8. Farbfernseh-Empfänger nach Anspruch 7, dadurch gekennzeichnet, daß er einen programmierbaren Festwertspeicher (116, 908) mit 164 × 8 bit Speicherplätzen enthält.

9. Farbfernseh-Empfänger nach einem der Ansprüche 1 bis 8, dadurch gekennzeichnet, daß die digitale Steuereinheit zur Ansteuerung der Vertikalablenk-Endstufe (407) einen Speicher (401) enthält, in welchem der Anfangs-Soll-Wert für den Bildanfang sowie die Änderungen von diesem Anfangs-Soll-Wert für jede zweite Bildzeile abgespeichert sind, daß sie einen Mittelwertbildner (403) enthält, welcher die Verteilung auf die zur jeweiligen Adresse gehörenden zwei Zeilen vornimmt, daß sie einen ersten Zähler (405) enthält, welcher den Rechteckimpuls zur Ansteuerung der Vertikalablenk-Endstufe (407) für die obere Bildhälfte durch Aufbereitung der im Speicher (401) enthaltenen Werte mittels des Addierers (404) des Zwischenspeichers (406) und des Zweierkomplementbildners (409) erzeugt, und daß sie einen zweiten Zähler enthält, welcher den Rechteckimpuls zur Ansteuerung der Vertikalablenk-Endstufe (407) für die untere Bildhälfte durch Aufbereitung der im Speicher (401) enthaltenen Werte mittels der Datensperre (424) des Addierers (420) und des Zwischenspeichers (422) erzeugt.

10. Farbfernseh-Empfänger nach Anspruch 9, dadurch gekennzeichnet, daß der Mittelwertbildner (403) einen 3-bit-Komparator (410), ein 3-bit-Latch (417) und einen 3-bit-Addierer (416) enthält.

11. Farbfernseh-Empfänger nach einem der Ansprüche 1 bis 10, dadurch gekennzeichnet, daß die digitale Steuereinheit zur Ansteuerung der Ost/West-Rasterkorrektur einen Speicher (604) enthält, in welchem die Soll-Werte für die einzelnen Zeilen abgespeichert sind, und daß sie einen Zähler (607) enthält, welcher die Impulse zur Ansteuerung der Horizontalablenk-Endstufe (609) mittels des Addierers (606) und des Zwischenspeichers (608) aus dem im Speicher (604) gespeicherten Werten erzeugt.

## Claims

1. A colour television receiver with an automatic adjusting system, characterised in that it comprises a digital control unit (106) for controlling the east/west screen correcting output stage (107), the horizontal deflection output stage (108) and the vertical deflection output stage (109), that the digital control unit (106) consists of a line counter (113), a programmable read-only memory (116, 908) and a logic circuit (114), that theoretical values for the east/west screen correction and the vertical deflection are stored in the programmable read-only memory (116, 908), these theoretical values being obtained in that in the case of an automatic adjustment by means of a picture pattern generator (904), a test picture ist produced on the picture screen (105, 901), which test picture is scanned line by line by means of a sensor system (117, 902) and the actual values are changed by an adjusting computer (118, 903) until they correspond to theoretical values stored in the adjusting computer (118, 903), and that the corrected values are then fed into the programmable read-only memory (116, 908) line by line by means of a data transmission line (119, 906) as theoretical values for the automatic adjusting system, and that during operation of the colour television receiver, the logic circuit (114) forms control pulses for the output stages (107, 108, 109) from the theoretical values stored line by line in the programmable read-only memory (116, 908).

2. A colour television receiver as claimed in Claim 1, characterised in that the read-only memory (116) only contains the theoretical values for the first line and stores the difference to the teoretical value of the first line for the theoretical values of the remaining lines.

3. A colour television receiver as claimed in Claim 1 or 2, characterised in that only the theoretical values for every second line of a television field are contained in the read-only memory (116).

4. A colour television receiver as claimed in Claim 3, characterised in that it contains a programmable read-only memory (116) having 156 × 8 bit storage positions.

5. A colour television receiver as claimed in one of Claims 1 to 4, characterised in that the digital control unit additionally contains an adjusting component (907) for analogue signal stages (white value, grey balance, beam current limitation, picture tube operating point), which adjusting component comprises a programmable read-only memory (908) which is connected via D-type flip-flops (909, 910, 911) or CCD-shift registers to 2 R-R-resistance networks or R2ⁿ-resistance networks which act as positioning elements and which convert the binary data values contained in the read-only store (908) into current magnitudes.

6. A colour television receiver as claimed in Claim 5, characterised in that a read-only store (116, 908) having 64-bit storage locations is contained in the colour television receiver for the adjusting positions of the analogue signal stages.

7. A colour television receiver as claimed in Claim 6, characterised in that it comprises a read-only memory (116, 908) in which are contained both the adjusting positions for the analogue signal stages and the theoretical values for the digitally controlled output stages (107, 108, 109).

8. A colour television receiver as claimed in Claim 7, characterised in that it comprises a programmable read-only memory (116, 908) having $164 \times 8$-bit storage locations.

9. A colour television receiver as claimed in one of Claims 1 to 8, characterised in that the digital control unit for controlling the vertical deflection output stage (407) contains a store (401) in which both the initial theoretical value for the picture commencement and the changes of this initial theoretical value for each second picture line are stored, that die digital control unit comprises a mean value former (403) which effects the distribution onto the two lines assigned to the respective address, and that it comprises a first counter (405) which produces the rectangular pulse for controlling the vertical deflection output stage (407) for the upper picture half by preparing the values contained in the store (401) by means of the adder (404) of the intermediate store (406) and of the two's complement former (409), and that it comprises a second counter which produces the rectangular pulse for controlling the vertical deflection output stage (407) for the lower picture half by preparing the values contained in the store by means of the data block (424) of the adder (420) and of the intermediate store (422).

10. A colour television receiver as claimed in Claim 9, characterised in that the mean value former (403) comprises a 3-bit comparator (410), a 3-bit latch (417) and a 3-bit adder (416).

11. A colour television receiver as claimed in one of Claims 1 to 10, characterised in that the digital control unit for controlling the east/west screen correction contains a store (604) in which the theoretical values for the individual lines are stored, and that it contains a counter (607) which produces the pulses for controlling the horizontal deflection output stage (609) by means of the adder (606) and of the intermediate store (608) from the values stored in the store (604).

## Revendications

1. Récepteur de télévision en couleurs à système d'alignement automatique, caractérisé par le fait qu'il comporte une unité de commande numérique (106) pour commander l'étage de sortie de correction de trame est/ouest (107), l'étage de sortie de la déviation horizontale (108) et de l'étage de sortie de la déviation verticale (109), que l'unité de commande numérique (106) est constituée par un compteur de lignes (113), par une mémoire morte programmable (116, 908) et par un circuit logique (114), que dans la mémoire morte programmable (116, 908) sont mémorisées des valeurs de consigne pour la correction est/ouest de la trame et pour la déviation verticale, lesdites valeurs de consigne étant obtenues en produisant sur l'écran (105, 901), pendant un alignement automatique et au moyen d'un générateur de mire, une mire qui est balayée ligne par ligne au moyen d'un système de détection (117, 902) et que l'on modifie concomitamment, par un calculateur d'alignement (118, 903) les valeurs instantanées jusqu'à ce qu'elles coincident avec les valeurs de consigne mémorisées dans le calculateur d'alignement (118, 903), les valeurs instantanées corrigées étant ensuite transmises, au titre de valeurs de consigne pour le système d'alignement et par l'intermédiaire d'une ligne de transmission de données (119, 906), ligne par ligne, dans la mémoire morte programmable (116, 908), et que le circuit logique (114) forme pendant le fonctionnement du récepteur de télévision en couleurs les impulsions de commande pour les étages de sortie (107, 108, 109), à partir des valeurs de consigne mémorisées ligne par ligne dans la mémoire morte programmable (116, 908).

2. Récepteur de télévision en couleurs selon la revendication 1, caractérisé par le fait que dans la mémoire morte (116) ne sont contenues que les valeurs de consigne pour la première ligne et y est mémorisée, pour les valeurs de consigne des autres lignes, la différence par rapport à la valeur de consigne de la première ligne.

3. Récepteur de télévision en couleurs selon la revendication 1 ou 2, caractérisé par le fait que seules les valeurs de consigne pour chaque seconde ligne d'une trame sont contenues dans la mémoire morte (116).

4. Récepteur de télévision en couleurs selon la recendication 3, caractérisé par le fait qu'il comporte une mémoire fixe programmable (116) à emplacements de mémorisation pour $156 \times 8$ bits.

5. Récepteur de télévision en couleurs selon l'une des revendications 1 à 4, caractérisé par le fait que l'unité de commande numérique comporte, en plus, un élément d'alignement (907) pour des étages de signaux analogiques (niveau du blanc, équilibrage du gris, courant du faisceau, point de fonctionnement du tube d'image), éléments d'équilibrage qui comportent une mémoire morte programmable (908) qui est reliée, par l'intermédiaire de multivibrateurs bistables D (909, 910, 911) ou par l'intermédiaire de registres à décalage CCD, avec des réseaux à résistances 2 R-R ou R2$^n$ agissant comme organes de réglage, réseaux qui transforment en grandeurs de courant les valeurs de données binaires qui sont contenues dans la mémoire morte (908).

6. Récepteur de télévision en couleurs selon la revendication 5, caractérisé par le fait que pour les positions d'alignement des étages des signaux analogiques, une mémoire morte (116, 908) à emplacements de mémoire pour 64 bits est contenue dans le récepteur de télévision en couleurs.

7. Récepteur de télévision en couleurs selon la revendication 6, caractérisé par le fait qu'il comporte une mémoire morte (116, 908) dans laquelle sont contenues aussi bien les positions d'alignement pour les étages de signaux analogiques que les valeurs de consigne pour les étages de sortie (107, 108, 109) attaqués par voie numérique.

8. Récepteur de télévision en couleurs selon la revendication 7, caractérisé par le fait qu'il comporte une mémoire morte programmable (116, 908) à emplacements de mémoire pour 164 × 8 bits.

9. Récepteur de télévision en couleurs selon l'une des revendications 1 à 8, caractérisé par le fait que l'unité de commande numérique pour l'attaque de l'étage de sortie (407) de la déviation verticale comporte une mémoire (401) dans laquelle sont mémorisées la valeur de consigne de départ pour le commencement de l'image ainsi que les modifications de cette valeur de consigne de départ pour chaque seconde ligne d'image, qu'elle comporte un formateur de valeur moyenne (403) qui procède à la répartition aux deux lignes qui appartiennent à une adresse concernée, qu'elle comporte un premier compteur (405) qui produit l'impulsion rectangulaire pour l'attaque de l'étage de sortie (407) de la déviation verticale pour la trame supérieure par élaboration des valeurs contenues dans la mémoire (401) au moyen de l'additionneur (404) de la mémoire intermédiaire (406) et du formateur du complément binaire (409), et qu'elle comporte un second compteur qui produit l'impulsion rectangulaire pour l'attaque de l'étage de sortie (407) de la dévation verticale pour la trame inférieure par élaboration des valeurs contenues dans la mémoire (401), au moyen de l'inhibiteur de données (424) de l'additionneur (420) et de la mémoire intermédiaire (422).

10. Récepteur de télévision en couleurs selon la revendication 9, caractérisé par le fait que le formateur de valeurs moyennes (403) comporte un comparateur à 3 bit (410), un commutateur électronique à 3 bits (417) et un additionneur à 3 bits (416).

11. Récepteur de télévision en couleurs selon l'une des revendications 1 à 10, caractérisé par le fait que l'unité de commande numérique pour l'attaque de la correction est/ouest de la trame comporte une mémoire (604) dans laquelle sont mémorisées les valeurs de consigne pour les différentes lignes, et qu'elle comporte un compteur (607) qui produit, à partir des valeurs mémorisées dans la mémoire (604), les impulsions pour l'attaque de l'étage de sortie (609) de la déviation horizontale, à l'aide de l'additionneur (606) et de la mémoire intermédiaire (608).

FIG 1

FIG 2

# FIG 3

FIG 4

**FIG 6**

**FIG 5**

# FIG 7

# FIG 8

# FIG 9